# EUROPÄISCHE PATENTANMELDUNG

(11) **EP 2 532 475 A2**
(43) Veröffentlichungstag der Anmeldung: **12.12.2012**
(21) Anmeldenummer: 12160251.0
(22) Anmeldetag: 20.03.2012
(51) Int. Cl.: B23Q 7/04, B65G 47/92, B25J 15/06

(54) **Transportvorrichtung zum Transportieren von nichtmagnetischen Werkstücken**

(30) Priorität: 06.06.2011 DE 102011106190
(71) Anmelder: REHAU AG + Co, 95111 Rehau (DE)
(72) Erfinder: Zapf, Armin, 91413 Neustadt/Aisch (DE); Grosch, Michael, 07919 Mühltroff (DE)

(57) **Zusammenfassung**

Die vorliegende Erfindung betrifft eine Transportvorrichtung 1, bei der ein nichtmagnetisches Werkstück 2 auf zwei gegenüberliegenden Seiten durch eine magnetische Anziehungskraft zwischen einer oberen Haltevorrichtung 3 und einer von der Transportvorrichtung 1 lösbaren, unteren Haltevorrichtung 4 festgehalten wird. Zusätzlich betrifft die vorliegende Erfindung eine für dieses Transportsystem geeignete Legeform 7, eine geeignete Hilfsablagevorrichtung 17 und 18 und eine geeignete Pressform 23, die mit dem erfindungsgemäßen Transportsystem in Beziehung stehen. Weiter betrifft die vorliegende Erfindung ein Verfahren zum Transportieren eines Werkstückes 2 durch ein Festhalten des Werkstückes 2 zwischen einer oberen Haltevorrichtung 3 auf der einen Seite und einer von der Transportvorrichtung 1 lösbaren, unteren Haltevorrichtung 4 auf der gegenüberliegenden Seite mittels einer magnetischen Anziehungskraft zwischen der oberen und der unteren Haltevorrichtung 3 und 4.

## Beschreibung

Die vorliegende Erfindung betrifft eine Transportvorrichtung, bei der ein nichtmagnetisches Werkstück auf zwei gegenüberliegenden Seiten durch eine magnetische Anziehungskraft zwischen einer oberen Haltevorrichtung und einer von der Transportvorrichtung lösbaren, unteren Haltevorrichtung festgehalten wird. Zusätzlich betrifft die vorliegende Erfindung eine für dieses Transportsystem geeignete Legeform, eine geeignete Hilfsablagevorrichtung und eine geeignete Pressform, die mit dem erfindungsgemäßen Transportsystem in Beziehung stehen. Weiter betrifft die vorliegende Erfindung ein Verfahren zum Transportieren eines Werkstückes durch ein Festhalten eines Werkstückes zwischen einer oberen Haltevorrichtung auf der einen Seite und einer von der Transportvorrichtung lösbaren, unteren Haltevorrichtung auf der gegenüberliegenden Seite mittels einer magnetischen Anziehungskraft zwischen der oberen und der unteren Haltevorrichtung.

Im Stand der Technik sind diverse Vorrichtungen zum Transportieren von nichtmagnetischen Werkstücken bekannt. Diese Vorrichtungen verwenden beispielsweise Vakuumoder Bernoulli-Greifer, um ein Werkstück zu greifen und zu transportieren.

Die Patentschrift DE 198 23 582 C2 beschreibt eine Vorrichtung zum Transport von hängenden tafelförmigen Werkstücken wie Blechen oder Platten mit zumindest einem umlaufend angetriebenen Fördergurt für die hieran anzulegenden Werkstücke und mit einer Haltevorrichtung, wobei die Haltevorrichtung die Werkstücke mittels durchdringenden Magnetfeldes oder durch Erzeugen von Unterdruck an Ansaugöffnungen festhält. Bei dieser Vorrichtung besteht das Problem, dass ein Ausnutzen der Magnetkraft nur bei magnetischen Werktücken erfolgt.

Die Gebrauchsmusterschrift DE 20 2007 002 032 U1 betrifft eine Klemmvorrichtung für das Halten eines Substrats zwischen einem oberen und einem unteren Teil, die über ein Scharnier verbunden sind und sich magnetisch anziehen. Da sich beide Teile aufgrund des Scharniers nicht voneinander lösen lassen, kann diese Vorrichtung nicht zum Greifen von Werkstücken von einer Oberseite verwendet werden.

Bei anderen Transportvorrichtungen entsteht das Problem, dass auf das Werkstück einseitig verhältnismäßig starke Kräfte ausgeübt werden müssen und empfindliche und fragile Werkstücke unter ihrem Eigengewicht zerstört werden können. Insbesondere bei porösen Werkstücken, wie beispielsweise einem Faserverbund, sind derartige Greifersysteme vollkommen untauglich. Des Weiteren sind im Stand der Technik Transportsysteme mit Nadelgreifer bekannt, die durch faserartige Werkstücke hindurchstoßen und diese auf der Unterseite halten. Hierbei wird jedoch das Werkstück lokal beschädigt. Halbzeuge oder Formteile aus vorimprägnierten Fasern, sogenannten Prepregs, die Endlosfasern in einer Kunststoffmatrix aufweisen, werden insbesondere im Leichtbau oder Fahrzeugbau eingesetzt. Hierbei ist es bekannt, vorfixierte Gelege aus mehreren zugeschnittenen thermoplastischen Prepregs zu bilden und diese zu erwärmen. Aufgrund der Erwärmung entstehen mechanisch labile Gebilde, da einerseits einzelne Zuschnitte aufeinander und einzelne Fasern innerhalb der Zuschnitte zueinander nur durch Adhäsion zwischen den Fasern und der umgebenden schmelzflüssigen Matrix zusammenhalten. Insbesondere unidirektionale Gelege sind dabei kritisch zu betrachten. Erst in späteren Verarbeitungsschritten, beispielsweise bei Pressvorgängen oder durch Erkalten, werden die labilen Gelege konsolidiert und in mechanisch stabile Gebilde übergeführt. Die labilen Gebilde müssen daher fixiert werden, um nicht schon während des Aufheizprozesses zu zerfallen. Während bei der Handhabung zweidimensionaler Gelege nur die Biegeschlaffheit des Materials ein Problem darstellt, dem man durch eine geeignete Anzahl von Stützstellen entgegenkommen kann, stellt sich bei einem dreidimensionalen Gelege darüber hinaus das Problem, dass dreidimensional verformte Zuschnitte, bei denen die ursprünglich geraden Fasern gebogen sind, ihre ursprüngliche Form wieder annehmen möchten. Es ist hier daher besonders wichtig, labile Gelege zuverlässig zu fixieren.

Es ist die der Erfindung zugrundeliegende Aufgabe, fragile Werkstücke sicher und beschädigungsfrei zu transportieren und zu bearbeiten.

Diese Aufgabe wird durch eine Transportvorrichtung zum Transportieren eines nichtmagnetischen Werkstücks mit zumindest einer oberen Haltevorrichtung zum Halten des Werkstückes auf der einen Seite und zumindest einer von der Transportvorrichtung lösbaren, unteren Haltevorrichtung zum Halten des Werkstücks auf der gegenüberliegenden Seite gelöst, wobei zwischen der oberen und der unteren Haltevorrichtung eine magnetische Anziehungskraft derart erzeugbar ist, dass das Werkstück zwischen der oberen und der unteren Haltevorrichtung festgehalten wird.

Durch die erfindungsgemäße Transportvorrichtung wird der Vorteil erreicht, dass durch die zweiseitige Fixierung durch eine obere und eine untere Haltevorrichtung auch fragile Werkstücke nicht unter ihrem Eigengewicht zerbrechen oder beschädigt werden, da das Eigengewicht des Werkstücks auf der unteren Haltevorrichtung lastet.

In einer weiteren vorteilhaften Ausführungsform umfasst die untere Haltevorrichtung ein permanentmagnetisches oder ferromagnetisches Material zum Erzeugen der Anziehungskraft zu der oberen Haltevorrichtung. Dadurch wird der Vorteil erreicht, dass das Werkstück ohne zusätzlichen Energieaufwand in der Transportvorrichtung festgehalten werden kann.

In einer weiteren vorteilhaften Ausführungsform umfasst die obere Haltevorrichtung einen Elektromagneten oder einen Dauermagneten zum Erzeugen der Anziehungskraft zu der unteren Haltevorrichtung. Durch den Elektromagneten wird der Vorteil erreicht, dass die Stärke der Anziehungskraft zwischen der oberen und der unteren Haltevorrichtung gegenüber der Gewichtskraft des Werkstückes angepasst werden kann und das Werkstück auf einfache Weise durch Abschalten des Elektromagneten aus der Transportvorrichtung freigegeben werden kann.

In einer weiteren vorteilhaften Ausführungsform umfasst die Transportvorrichtung eine mechanische Vorrichtung zum Freigeben des Werkstücks aus den Haltevorrichtungen. Dadurch wird der Vorteil erreicht, dass das Werkstück mit einfachen konstruktiven Mitteln aus der Transportvorrichtung freigegeben werden kann.

In einer weiteren vorteilhaften Ausführungsform umfasst die mechanische Vorrichtung zum Freigeben des Werkstücks eine Pressplatte zum Verändern des Abstandes zwischen dem Werkstück und der oberen Haltevorrichtung. Dadurch kann auf einfache Weise erreicht werden, dass sich die Anziehungskraft zwischen der oberen und der unteren Haltevorrichtung vermindert und das Werkstück freigeben wird.

In einer weiteren vorteilhaften Ausführungsform umfasst die mechanische Vorrichtung zum Freigeben des Werkstücks ein Hilfshaltesystem zum Ausüben einer entgegensetzt zur Anziehungskraft wirkenden Kraft auf die untere Haltevorrichtung. Dadurch wird der Vorteil erreicht, dass die untere Haltevorrichtung beim Entfernen der oberen Haltevorrichtung nieder gehalten wird und das Werkstück freigegeben wird.

In einer weiteren vorteilhaften Ausführungsform ist die untere Haltevorrichtung derart ausgestaltet, dass sich die Haltevorrichtung in einer Aussparung zum Einsetzen der Haltevorrichtung selbst justiert. Dadurch wird der Vorteil erreicht, dass sich die untere Haltevorrichtung an einer exakt vorgesehenen Position befindet und der Transport des Werkstücks auf besonders beschädigungsfreie Weise erfolgt, beispielsweise weil Druckstellen durch nicht exakt positionierte Haltevorrichtungen vermieden werden.

In einer weiteren vorteilhaften Ausführungsform ist die untere Haltevorrichtung derart ausgestaltet, dass die Haltevorrichtung in einer Aussparung zum Einsetzen der Haltevorrichtung fixierbar ist. Dadurch wird der Vorteil erreicht, dass die untere Vorrichtung in einer entsprechenden Aussparung arretierbar ist und ein Freigeben des Werkstücks erleichtert wird.

Zusätzlich wird die erfindungsgemäße Aufgabe durch eine Legeform zum Auslegen eines Werkstückes gelöst, wobei die Legeform eine derart ausgestaltete Aussparung zum Einsetzen der unteren Haltevorrichtung aufweist, dass sich beim Einsetzen der unteren Haltevorrichtung in die Aussparung eine kontinuierliche Legefläche ergibt. Dadurch wird der Vorteil erreicht, dass das Werkstück besonders beschädigungsarm auf einer Form für weitere Arbeitsgänge abgelegt oder ausgelegt werden kann.

Weiter wird die erfindungsgemäße Aufgabe durch eine Hilfsablagevorrichtung zum Ablegen eines Werkstückes gelöst, wobei die Hilfsablagevorrichtung eine derart ausgestaltete Aufnahme für die untere Haltevorrichtung umfasst, dass beim Ablegen des Werkstückes in der Hilfsablagevorrichtung das Werkstück durch die von der oberen Haltevorrichtung gelöste, untere Haltevorrichtung gehalten wird. Dadurch wird der Vorteil erreicht, dass das Werkstück zusammen mit der unteren Haltevorrichtung durch die Transportvorrichtung an einem geeigneten Ort abgelegt werden kann und durch die gleiche Transportvorrichtung erneut wieder aufgegriffen werden kann, beispielsweise in einem Lager.

Weiter wird die erfindungsgemäße Aufgabe durch ein Pressformteil zum Pressen eines Werkstücks gelöst, wobei das Pressformteil eine derart gestaltete Aussparung zum Einsetzen der unteren Haltevorrichtung aufweist, dass sich beim Einsetzen der unteren Haltevorrichtung in die Aussparung eine kontinuierliche Pressfläche ergibt und die untere Haltevorrichtung in dem Pressformteil derart verschiebbar ist, dass die untere Haltevorrichtung zum Herauslösen des Werkstückes aus dem Pressformteil verwendet werden kann.

Dadurch wird der Vorteil erreicht, dass das Werkstück ohne vorheriges Entfernen der unteren Haltevorrichtung in einem Arbeitsgang gepresst werden kann, ausgeworfen werden kann und anschließend durch die Transportvorrichtung wieder aufgegriffen werden kann.

Weiter wird die erfindungsgemäße Aufgabe durch ein Verfahren zum Transportieren eines nichtmagnetischen Werkstücks gelöst, mit dem Schritt eines Festhaltens eines Werkstückes zwischen einer oberen Haltevorrichtung auf der einen Seite und einer von der Transportvorrichtung lösbaren, unteren Haltevorrichtung auf der gegenüberliegenden Seite mittels einer magnetischen Anziehungskraft zwischen der oberen und der unteren Haltevorrichtung. Dadurch wird der Vorteil erreicht, dass durch das Festhalten des Werkstücks an zwei Seiten das Werkstück besonders schonend transportiert werden kann.

Ausführungsbeispiele der Erfindung sind in den Zeichnungen dargestellt und werden im Folgenden näher beschrieben.

Es zeigen:
- Fig. 1: eine schematische Ansicht der erfindungsgemäßen Transportvorrichtung zusammen mit einer Legeform in abgelegtem Zustand des Werkstückes,
- Fig. 2: eine schematische Ansicht der erfindungsgemäßen Transportvorrichtung zusammen mit der Legeform in angehobenem Zustand des Werkstückes,
- Fig. 3: eine schematische Ansicht einer ersten Ausführungsform einer oberen und einer unteren Haltevorrichtung in geschlossenem Zustand,
- Fig. 4: eine schematische Ansicht der ersten Ausführungsform der oberen und der unteren Haltevorrichtung beim Freigeben des Werkstücks,
- Fig. 5: eine schematische Ansicht einer zweiten Ausführungsform der oberen und der unteren Haltevorrichtung in geschlossenem Zustand,
- Fig. 6: eine schematische Ansicht der zweiten Ausführungsform der oberen und der unteren Haltevorrichtung beim Freigeben des Werkstücks,
- Fig. 7: eine schematische Ansicht einer Hilfsablagevorrichtung zum Ablegen des Werkstücks,
- Fig. 8: eine schematische Ansicht eines Pressformwerkzeugs zusammen mit der unteren Haltevorrichtung in geschlossenem Zustand, und
- Fig. 9: eine schematische Ansicht eines Unterteils des Pressformwerkzeugs zusammen mit der unteren Haltevorrichtung in geöffnetem Zustand.

Es folgt die Erläuterung der Erfindung anhand der Zeichnungen nach Aufbau und nach Wirkungsweise der dargestellten Erfindung.

Die erfindungsgemäße Transportvorrichtung dient dazu, nichtmagnetische Werkstücke oder Gegenstände in einer horizontalen oder vertikalen Richtung in einer, zwei oder drei Raumrichtungen zu transportieren und zu bewegen, wie beispielsweise bei einem Produktionsprozess. Bei einem Produktionsprozess findet ein derartiger Transport von Werkstücken beispielsweise zwischen verschiedenen Bearbeitungsschritten des Werkstücks statt. Außerdem kann ein derartiger Transport zum Ablegen des Werkstücks in einem Lager oder zu anderen Zwecken erforderlich sein. Grundsätzlich kann die erfindungsgemäße Transportvorrichtung jedoch für alle Transportaufgaben verwendet werden.

Unter einem nichtmagnetischen Werkstück in erfindungsgemäßem Sinne ist jeder Gegenstand zu verstehen, der als solcher nicht wesentlich mit der zwischen den Haltevorrichtungen erzeugten magnetischen Anziehungskraft wechselwirkt. Derartige Werkstücke können beispielsweise Kunststoffe, (Kohle)-Fasern, Keramik, Glas, Stoffe, Gewebe, Papier, Pappe oder Holz umfassen. Ebenso können die Werkstücke nicht-ferromagnetische Metalle umfassen, wie beispielsweise Aluminium, Kupfer, Silber oder Gold. Sogar die Anwesenheit von ferromagnetischen oder permanentmagnetischen Substanzen in dem Werkstück ist solange unschädlich, wie die Funktion der erfindungsgemäßen Haltevorrichtung durch diese Substanzen nicht beeinträchtigt wird. Dies kann beispielsweise dann der Fall sein, wenn die entsprechenden Substanzen lediglich in geringer Konzentration in dem Werkstück vorhanden sind.

Obwohl die erfindungsgemäße Transportvorrichtung grundsätzlich geeignet ist, alle möglichen nichtmagnetischen Werkstücke zu transportieren, wird die Verwendung der Transportvorrichtung in Verbindung mit einem thermoplastischen Werkstück bestehend aus Endlosfasern und einer ungehärteten duroplastischen Kunststoffmatrix beschrieben, da hierdurch das Zusammenspiel der erfindungsgemäßen Vorrichtungen besonders deutlich dargestellt werden kann. Die Endlosfasern können als reine unidirektionale Schicht, als Gewebe oder Gelege vorliegen. Derartige Materialien sind im Stand der Technik unter der Bezeichnung "Prepregs" (Preimpregnated Fibers = Vorimprägnierte Fasern) bekannt. Prepregs finden vor allem im Leichtbau Verwendung und liegen im vorverarbeiteten Zustand in der Regel bahnförmig und auf Rollen gewickelt vor.

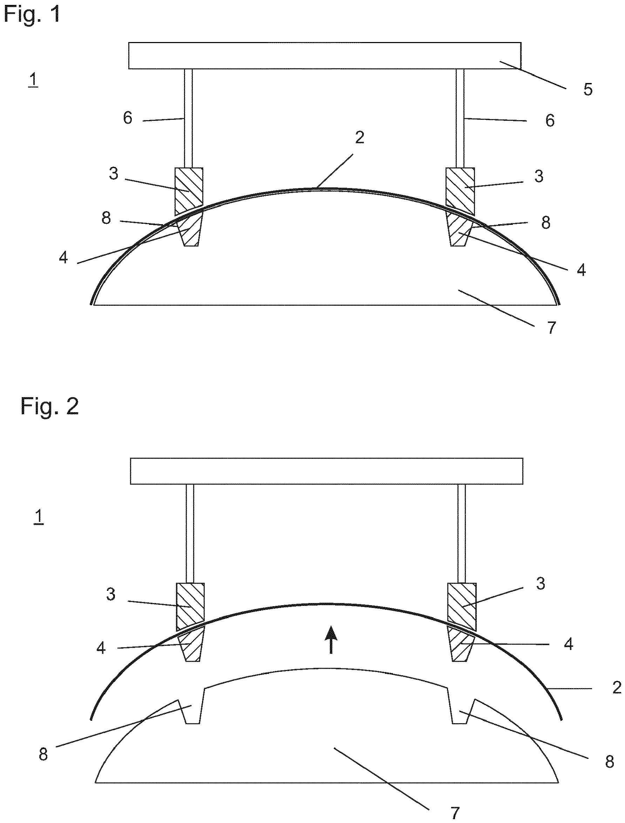

Fig. 1 zeigt hierzu eine schematische Ansicht der erfindungsgemäßen Transportvorrichtung 1 zusammen mit einer Legeform 7 in abgelegten Zustand des thermoplastischen Faserwerkstückes 2.

Die Transportvorrichtung 1 umfasst ein Matrixgreifersystem mit einem Querelement 5 und zwei Längselementen 6. Am unteren Ende der Längselemente 6 ist jeweils eine obere Haltevorrichtung 3 (Gelegeoberhalter) zum Halten des Werkstücks 2 angeordnet. Im Allgemeinen kann die Zahl der Haltvorrichtungen 3 variieren, um ein möglichst schonendes Fixieren des Werkstückes 2 an günstigen und geeigneten Stellen oder Punkten des Werkstückes 2 zu ermöglichen. Dies kann beispielsweise an geeigneten Stellen in Randbereichen des Werkstücks 2 stattfinden oder es kann eine zentrale Haltevorrichtung 3 bei symmetrischen Werkstücken 2 bereitgestellt sein.

Statt dem beschriebenen Matrixgreifersystem kann im Allgemeinen jede Vorrichtung verwendet werden, die geeignet ist, die oberen Haltevorrichtungen 3 an der vorgesehenen Position des Werkstücks 2 zu positionieren. Beispielsweise ist es möglich statt einem Matrixgreifersystem eine Passform für das Werkstück 2 zu verwenden, in die an geeigneten Stellen die erfindungsgemäßen oberen Haltevorrichtungen 3 integriert sind.

Das biegsame, faserartige Material (Gelege) des Prepreg-Werkstücks 2 liegt im ersten Arbeitsgang auf der dreidimensionalen Legeform 7 auf und nimmt auf der Legeform 7 die gewünschte Form an. Die Legeform 7 kann insbesondere weitere Vorrichtungen umfassen, die zur Vorbehandlung des Prepreg-Werkstückes 2 dienen, wie beispielsweise eine Heizung zum Erwärmen oder Vorfixieren des Prepreg-Werkstückes 2, so dass ein schneller Aufbau des Gesamtgeleges ermöglicht wird.

In der Legeform 7 sind Aussparungen 8 vorgesehen, in denen formschlüssig die unteren Haltevorrichtungen 4 des Transportsystems 1 aufnehmbar sind. Dabei sind die Aussparungen 8 und die unteren Haltevorrichtungen 4 derart gestaltet, dass sich auf der Legeform 7 bei eingesetzter Haltevorrichtung 4 eine glatte und kontinuierliche Ablagefläche für das leicht biegsame Material des Werkstücks 2 ergibt und die der vorgesehenen Oberflächenkontur des Werkstückes 2 entspricht.

Die unteren Haltevorrichtungen 4 (Gelegeunterhalter) befinden sich an der gegenüberliegenden Seite des Werkstückes 2 und gegenüber den oberen Haltevorrichtungen 3. Zwischen der oberen Haltevorrichtung 3 und der unteren Haltevorrichtung 4 befindet sich das faserartige Werkstück 2. Um das Werkstück 2 anzuheben, wird zwischen der oberen Haltevorrichtung 3 und der unteren Haltevorrichtung 4 eine magnetische Anziehungskraft erzeugt, durch die das Werkstück 2 zwischen den Haltevorrichtungen 3 und 4 eingeklemmt und gehalten wird. Um das Werkstück 2 aus der Legeform 7 herausnehmen zu können, muss die magnetische Anziehungskraft gleich oder größer als die Gewichtskraft des Werkstückes 2 und der unteren Haltevorrichtungen 4 sein. Um beim Transport auftretende Nebeneffekte zu kompensieren, wie beispielsweise eine auftretende Beschleunigung oder eine Reibung beim Entnehmen des Werkstücks, sollte die Anziehungskraft dementsprechend größer gewählt werden.

Da die unteren Haltevorrichtungen 4 nur eine geringe Masse und Wärmekapazität aufweisen, ist ein Energieverlust bei einer Wärmebehandlung des Prepreg-Werkstücks gering. Insbesondere können die oberen und unteren Haltevorrichtungen 3 und 4 während der gesamten Bearbeitungszeit auf einem konstanten Temperaturniveau gehalten werden. Um unterschiedlich gestaltete Werkstücke transportieren zu können, können jeweils angepasste Sätze von unteren Haltevorrichtungen 4 durch die Transportvorrichtung verwendet werden.

Zur Herstellung der Anziehungskraft zwischen der oberen Haltevorrichtung 3 und der unteren Haltevorrichtung 4 sind unterschiedliche Ausgestaltungen denkbar. Beispielsweise kann die obere Haltevorrichtung 3 ein permanent- oder ferromagnetisches Material umfassen, das mit einem paramagnetischen Material in der unteren Haltevorrichtung 4 wechselwirkt. Alternativ kann umgekehrt die untere Haltevorrichtung 4 ein permanent- oder ferromagnetisches Material umfassen, das mit einem paramagnetischen Material in der oberen Haltevorrichtung 3 wechselwirkt. Alternativ kann sowohl die obere Haltevorrichtung 3 als auch die untere Haltevorrichtung 4 ein permanentmagnetisches Material umfassen, so dass der Vorteil einer starken Anziehungskraft zwischen beiden Teilen erreicht wird. Eine besonders starke Anziehungskraft ergibt sich, wenn sich unterschiedliche Pole eines durch Dauermagnete erzeugten Magnetfelds gegenüber liegen, so dass auch schwere Werkstücke 2 angehoben werden können.

Alternativ kann in der oberen und/oder der unteren Haltevorrichtung 3 oder 4 ein Elektromagnet angeordnet sein, dessen Magnetfeld mit einem geeigneten Material in der anderen Haltevorrichtung 3 oder 4 derart wechselwirkt, dass eine Anziehungskraft entsteht. Die Verwendung eines Elektromagneten weist den Vorteil auf, dass sich das Magnetfeld und die erzeugte Anziehungskraft zwischen der oberen und der unteren Haltevorrichtung 3 und 4 über den Stromfluss durch den Elektromagneten steuern lassen.

Als dauer- oder permanentmagnetisches Material kommen beispielsweise Stahl, Ferrite, Bismanol (Bismut-Mangan), Aluminium-Nickel-Kobalt, Samarium-Kobalt oder Neodym-Eisen-Bor in Betracht. Als paramagnetisches Material können Eisen, Nickel, Kobalt, Stahllegierungen, Chrom- Nickelstahl oder Weichferrite verwendet werden.

Im Allgemeinen sind erfindungsgemäß jedoch alle Maßnahmen und Materialien geeignet, durch die zwischen der oberen Haltevorrichtung 3 und der unteren Haltevorrichtung 4 eine ausreichend starke, magnetische Anziehungskraft erzeugt werden kann, so dass das Werkstück 2 zwischen den Haltevorrichtungen 3 und 4 gehalten wird.

Zum Aufnehmen des Werkstücks 2 werden die oberen Haltevorrichtungen 3 an die unteren Haltevorrichtungen 4 herangeführt. Nachdem die magnetische Anziehungskraft zwischen beiden Teilen wirkt, kann das Werkstück 2 angehoben und transportiert werden.

Das Ablegen erfolgt umgekehrt, indem zunächst das Werkstück 2 in eine geeignete Vorrichtung gesetzt wird, die den unteren Haltevorrichtungen 4 entsprechende Aussparungen 8 aufweist. Sobald die unteren Haltevorrichtungen 4 in die Aufnahmen eingeführt sind, kann die magnetische Verbindung getrennt werden und das Matrixgreifersystem fortbewegt werden.

Fig. 2 zeigt eine schematische Ansicht der erfindungsgemäßen Transportvorrichtung 1 zusammen mit der Legeform 7 in angehobenen Zustand des Werkstückes 2. Dazu werden die gleichen Bezugszeichen wie in Fig. 1 verwendet.

In diesem Zustand wird das Werkstück 2 durch die zwischen den Haltevorrichtungen 3 und 4 erzeugte Anziehungskraft gehalten und kann durch das Matrixgreifersystem vertikal in Pfeilrichtung aus der Legeform 7 gehoben werden. Folglich werden die unteren Haltevorrichtungen 4 zusammen mit dem Werkstück 2 aus der Legeform 7 gehoben. Dieser Schritt kann beispielsweise nach dem Vorfixieren des Prepreg-Werkstücks durchgeführt werden. Nach dem Vorfixieren wird die Form des thermoplastischen Werkstücks lediglich durch Adhäsion zwischen den Fasern und der umgebenden, schmelzflüssigen Matrix zusammengehalten, so dass das Werkstück äußerst fragil ist. Insbesondere tendiert das Fasermaterial dazu, seine ursprüngliche flächige Form anzunehmen.

Bei der Verwendung des erfindungsgemäßen Transportsystems entsteht der Vorteil, dass das Eigengewicht des noch fragilen Faser-Werkstücks 2 auf den unteren Haltevorrichtungen 4 lastet und das empfindliche Werkstück 2 zerstörungsfrei angehoben und transportiert werden kann.

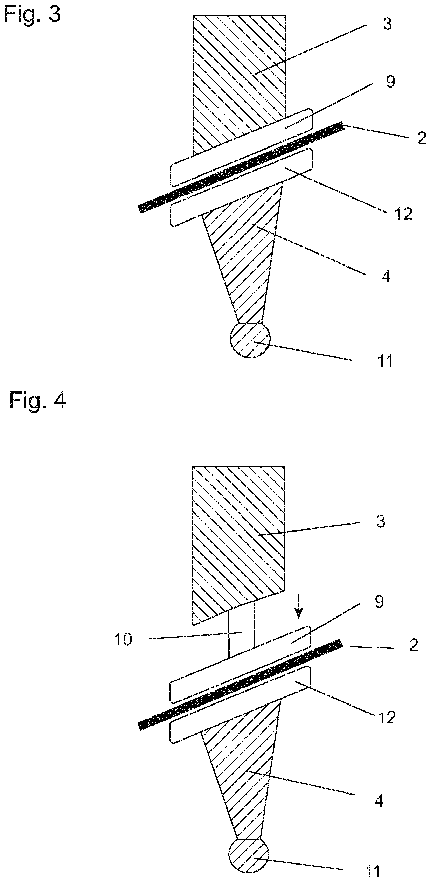

Fig. 3 zeigt eine schematische Ansicht einer ersten Ausführungsform einer oberen und einer unteren Haltevorrichtung 3 und 4 in geschlossenem Zustand.

In dieser Ausführungsform umfasst die untere Haltevorrichtung 4 an der dem Prepreg-Werkstück zugewandten Seite eine magnetische Platte oder Plattierung 12 zum Erzeugen eines Magnetfeldes. Eine derartige Plattierung 12 kann beispielsweise aus einem hartmagnetischen Material hergestellt sein, das dauerhaft ein Magnetfeld erzeugt. Demgegenüber kann der Körper der oberen Haltevorrichtung 3 ein weichmagnetisches Material umfassen, das durch das erzeugte Magnetfeld angezogen wird.

Durch die Wechselwirkung zwischen dem hart- und dem weichmagnetischen Material in der oberen und der unteren Haltevorrichtung 3 und 4 entsteht eine Anziehungskraft, durch die das faserartige Prepreg-Werkstück 2 zwischen beiden Haltevorrichtungen 3 und 4 festgehalten wird.

Zusätzlich weist die lösbare, untere Haltevorrichtung 4 eine konische, nach unten hin zusammenlaufende Form auf. Dies weist den Vorteil auf, dass sich beim Absenken des Werkstückes 2 die untere Haltevorrichtung 4 von selbst innerhalb einer entsprechend geformten Aussparung 8 zentriert und beispielsweise mit der Legeform eine übergangsfreie Fläche bildet, so dass eine hohe Genauigkeit beim Ablegen gewährleistet werden kann. Im Allgemeinen ist die selbstjustierende Form der unteren Haltevorrichtung 4 nicht auf eine konische Form beschränkt, sondern es können auch andere selbstjustierende Formen zum Einsatz kommen, wie beispielsweise eine keilförmige, kegelförmige, pyramidenförmige oder tetraederförmige Ausbildung. Außerdem kann auch eine abgerundete Form der unteren Haltevorrichtung 4 ein Selbstjustieren bewirken oder unterstützen.

Zudem kann eine Erfassungsvorrichtung vorgesehen sein, die erfasst, ob die untere Haltevorrichtung 4 in der Aussparung 8 eingesetzt und ausgerichtet ist, um Fehler beim Transport des Prepreg-Werkstücks 2 zu vermeiden.

Die Form der einzelnen, unteren und oberen Haltevorrichtungen 3 und 4 innerhalb des Transportsystems ist dabei nicht auf die gezeigte, abgeschrägte Form beschränkt, sondern kann je nach Position gegenüber dem Werkstück 2 variieren.

An seinem unteren Ende weist die untere Haltevorrichtung 4 einen Kugelkopf 11 auf. Der Kugelkopf 11 dient zum zusätzlichen mechanischen Arretieren der unteren Haltevorrichtung 4 in der Aussparung 8. Dadurch kann die untere Haltevorrichtung 4 in der Aussparung 8 einrasten, sofern dazu in der Aussparung geeignete Mittel vorgesehen sind. Ein Einrasten in der Aussparung 8 kann beispielsweise ein Trennen der gegenüberliegenden Haltevorrichtungen 3 und 4 beim Freigeben des Werkstücks 2 unterstützen oder bewirken. Die obere Haltevorrichtung 3 umfasst eine Presskopfplatte 9. Die Presskopfplatte 9 ist in Richtung des Prepreg-Werkstücks 2 derart verschiebbar, dass sich der Abstand zwischen der oberen Haltevorrichtung 3 und dem Werkstück und somit gleichzeitig gegenüber der unteren Haltevorrichtung 4 vergrößert. Durch das mechanische Vergrößern des Abstandes vermindert sich die Anziehungskraft zwischen den Haltevorrichtungen 3 und 4 und das Werkstück 2 wird von der Transportvorrichtung freigegeben. Dabei wird die untere Haltevorrichtung 4 von der oberen Haltevorrichtung 3 gelöst und verbleibt in der Aussparung 8.

Fig. 4 zeigt eine schematische Ansicht der ersten Ausführungsform der oberen und der unteren Haltevorrichtung 3 und 4 beim Freigeben des Werkstücks 2. Dazu werden die gleichen Bezugszeichen wie in Fig. 3 verwendet.

Beim Freigeben des Werkstücks 2 aus den Haltevorrichtungen 3 und 4 wird die Pressplatte 9 in Pfeilrichtung verschoben. Dadurch vergrößert sich der Abstand zwischen der oberen und der unteren Haltevorrichtung 3 und 4 und die magnetische Anziehungskraft wird vermindert, so dass sich die beiden Teile voneinander trennen. Eine derartige Verschiebung der Pressplatte 9 wird durch eine Aktuatorstange oder Betätigungsstange 10 bewirkt. Diese könnte innerhalb der oberen Haltevorrichtung 3 hydraulisch oder elektromagnetisch angetrieben werden.

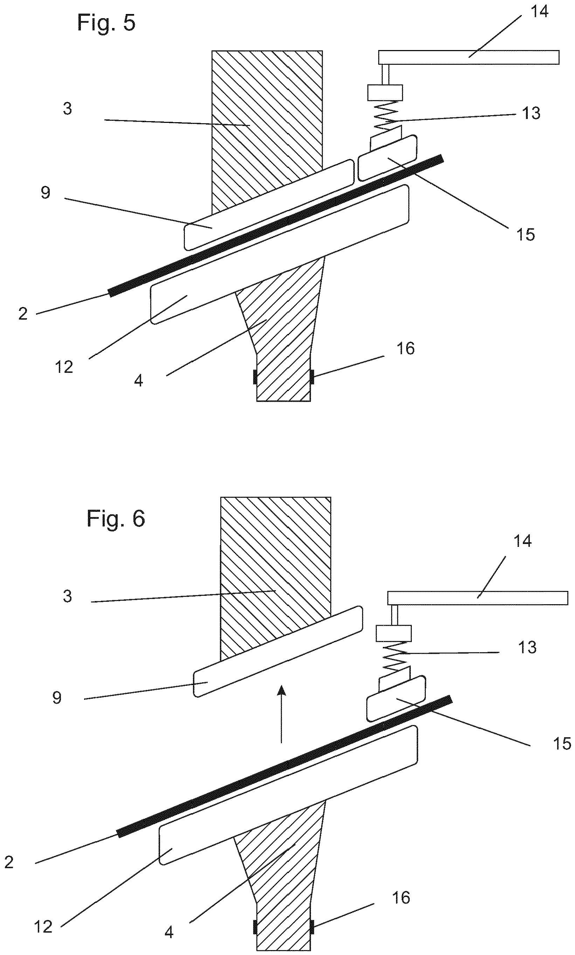

Fig. 5 zeigt eine schematische Ansicht einer zweiten Ausführungsform der oberen und der unteren Haltevorrichtung 3 und 4 in geschlossenen Zustand.

Ebenso wie bei der ersten Ausführungsform ist das Werkstück 2 zwischen der oberen Haltevorrichtung 3 und der unteren Haltevorrichtung 4 durch die magnetische Anziehungskraft eingeklemmt. Die untere Haltevorrichtung 4 umfasst eine magnetische Platte 12 und die obere Haltevorrichtung 3 umfasst eine unbewegliche Pressplatte 9. Die Pressplatte 9 kann in dieser Ausführungsform beispielsweise derart ausgebildet sein, dass diese für ein schonendes Festhalten des Werkstücks 2 dient. Dazu kann die Pressplatte 9 ein elastisches oder weiches Material umfassen, wie beispielsweise Stoff, Gummi oder Silikon. Dies weist den Vorteil auf, dass Druckstellen durch die obere Haltevorrichtung 3 beim Greifen des Werkstückes 2 vermieden werden. Eine derartige Beschichtung kann jedoch zusätzlich auch auf der unteren magnetischen Platte 12 vorgesehen sein.

Die Platte 12 weist eine größere Fläche gegenüber dem Werkstück 2 auf als die Pressplatte 9. Um die magnetische Verbindung zwischen den Haltevorrichtungen 3 und 4 zu lösen, ist ein Hilfshaltesystem vorgesehen, dass einen Druckkopf 15, eine Feder 13 und einen Hebel oder Arm 14 umfasst. Zum Trennen wird mithilfe des Hebels 14 der Druckkopf 15 an einen Ort geführt, an dem die Platte 12 seitlich gegenüber der Pressplatte 9 hervorragt, so dass durch den Druckkopf 15 von oben ein Druck auf die untere Haltevorrichtung 4 ausgeübt werden kann.

Zusätzlich umfasst die untere Haltevorrichtung 4 einen umlaufenden Dichtring 16. Dieser bewirkt, dass durch Anlegen eines Unterdrucks in der Aussparung 8 die untere Haltevorrichtung 4 in der Aussparung 8 fixiert werden kann. Dadurch wird ein Lösen der magnetischen Verbindung zwischen den Haltevorrichtungen 3 und 4 unterstützt. In einer anderen Ausführungsform könnte jedoch auch ein derartiger Unterdruck ausgeübt werden, dass die untere Haltevorrichtung 4 so in der Aussparung 8 fixiert ist, dass sich beim Anheben der oberen Haltevorrichtung 3 die magnetische Verbindung ohne Hilfshaltesystem löst. Sind die Aussparung 8 und die untere Haltevorrichtung 4 formschlüssig aufeinander abgestimmt, kann gegebenenfalls auf den Dichtring 16 zum Erzeugen einer Haltekraft durch Unterdruck verzichtet werden.

Fig. 6 zeigt eine schematische Ansicht der zweiten Ausführungsform der oberen und der unteren Haltevorrichtung 4 beim Freigeben des Werkstücks 2. Dazu werden die gleichen Bezugszeichen wie in Fig. 5 verwendet.

Beim Anheben der oberen Haltevorrichtung 3 wird die untere Haltvorrichtung 4 durch den angelegten Unterdruck und/oder das Hilfshaltesystem niedergehalten, so dass die magnetische Anziehungskraft zwischen beiden Haltevorrichtungen 3 und 4 überwunden wird und das Werkstück aus der Transportvorrichtung 2 freigegeben wird. Hierzu kann das Hilfshaltesystem beispielsweise über einen zusätzlichen Matrixgreifer an die entsprechenden Stellen herangeführt werden. Durch die Feder 13 des Hilfshaltesystems wird eine vordefinierte Andrückkraft beim Auflegen des Druckkopfes 15 auf das Werkstück sichergestellt, so dass Beschädigungen des Werkstücks 2 durch das Hilfshaltesystem sicher vermieden werden und trotzdem eine ausreichende Kraft zum Trennen der Verbindung ausgeübt wird. Zudem sorgt die Feder 13 dafür, dass die Hilfshaltevorrichtung unempfindlich gegenüber thermischen Schwankungen ist, die zu einer Änderung der Andrückkraft führen können.

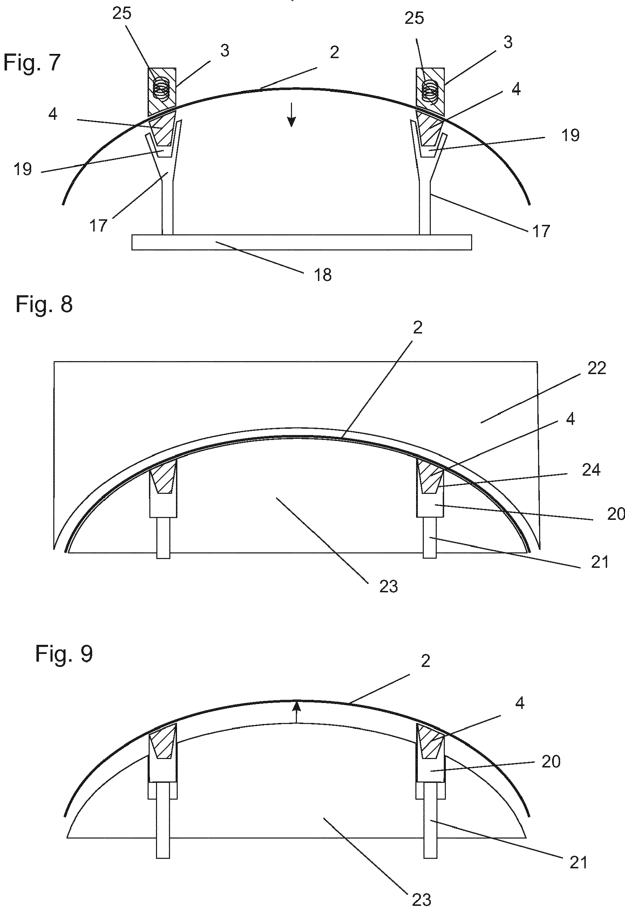

Fig. 7 zeigt eine schematische Ansicht einer Hilfsablagevorrichtung zum Ablegen des Werkstücks.

Die Hilfsablagevorrichtung umfasst ein Trägerteil 18 mit zwei Aufnahmevorrichtungen 17, die eine Aussparung 19 zum Aufnehmen der unteren Haltevorrichtung 4 umfassen, wenn das Werkstück 2 durch die Transportvorrichtung zusammen mit den unteren Haltevorrichtungen 4 in die Hilfsablagevorrichtung gelegt wird. Ein temporäres Ablegen kann beispielsweise erforderlich sein, um das erwärmte Werkstück 2 zwischen zwei Arbeitsgängen abkühlen zu lassen. Darüber hinaus kann die Hilfsablagevorrichtung dazu dienen, das Werkstück 2 in einem Lager für Werkstücke abzulegen. Wahlweise können die unteren Haltevorrichtungen 4 in den Aussparungen 19 temporär fixiert werden, wie beispielsweise durch den beschriebenen Kugelkopf oder einen Unterdruck.

Durch die Aufnahme der unteren Haltevorrichtungen 4 in der Hilfsablagevorrichtung wird der Vorteil erreicht, dass das Werkstück 2 zum erneuten Weitertransport sofort wieder durch das erfindungsgemäße Transportsystem aufgenommen werden kann, da sich die unteren Haltevorrichtungen 4 nach wie vor an den vorgesehenen Stellen gegenüber zu den oberen Haltevorrichtungen 3 befinden.

Um das Werkstück 2 aufzunehmen, umfasst die obere Haltevorrichtung 3 beispielsweise einen Elektromagneten 25, der durch eine Spule gebildet wird. Fließt durch die Spule ein Strom, wird ein magnetisches Feld erzeugt, durch das die unteren Haltevorrichtungen 4 angezogen werden. Beim Ablegen des Werkstücks 2 in der Hilfsablagevorrichtung wird das Werkstück 2 derart eingesetzt, dass die unteren Haltevorrichtungen 4 in die Aufnahmen 19 gleiten. Danach wird der Stromfluss durch die Spule 25 unterbrochen und die magnetische Anziehungskraft wird aufgehoben. Dadurch wird das Prepreg-Werkstück 2 freigegeben. Beim Anheben des Matrixgreifersystems verbleiben die unteren Haltevorrichtungen 4 in der Aufnahme 19 der Hilfsablagevorrichtung.

Bei einer Wärmebehandlung des Prepreg-Werkstücks 2, die zu einer Öffnung der thermischen Fügestellen führen könnte, kann das Werkstück 2 vor dem Entfernen der oberen Haltevorrichtungen 3 mit einem oben beschriebenen Hilfshaltesystem in der Hilfsablagevorrichtung fixiert gehalten werden.

Fig. 8 zeigt eine schematische Ansicht eines Pressformwerkzeugs zusammen mit der unteren Haltevorrichtung 4 in geschlossenem Zustand.

Das Pressformwerkzeug umfasst ein oberes Pressformteil 22 und ein unteres Pressformteil 23. Das Prepreg-Werkstück 2 befindet sich zwischen dem oberen Pressformteil 22 und dem unteren Pressformteil 23. Durch Zusammenpressen der beiden Pressformteile 22 und 23, bei dem das Werkstück 2 zusätzlich erhitzt werden kann, wird das Prepreg-Werkstück 2 bearbeitet. Insbesondere wird durch den Pressvorgang erreicht, dass sich das Prepreg-Werkstück 2 verfestigt.

Um das Werkstück 2 in das Pressformwerkzeug einlegen zu können, weist das untere Teil 23 des Pressformwerkzeuges Aussparungen 24 auf, in die beim Einlegen des Werkstücks 2 die unteren Haltevorrichtungen 4 hineingleiten. Diese Aussparungen 24 sind derart ausgebildet, dass die unteren Haltevorrichtungen 4 den Pressvorgang nicht behindern und sich eine kontinuierliche und glatte Pressfläche ergibt. Darüber hinaus sind die unteren Haltevorrichtungen 4 in dem unteren Teil 23 des Pressformwerkzeuges verschiebbar angeordnet, so dass sich diese aus dem unteren Pressformteil 23 herausdrücken lassen. Zu diesem Zweck sind die Aussparungen 24 in beweglichen Aufnahmeteilen 20 vorgesehen, die sich durch Betätigungsstangen 21 in Richtung des oberen Pressformteils 22 drücken lassen. Ein Vortrieb der Betätigungsstangen 21 könnte beispielsweise durch eine geeignete Hydraulikvorrichtung, elektromagnetisch oder über ein Gewinde erfolgen. Bevor ein neues Werkstück 2 für einen neuen Pressvorgang in das Pressformwerkzeug eingelegt wird, werden die Aufnahmeteile 20 wieder in ihre zurückgezogene Position gebracht, so dass beim Einsetzen der unteren Haltevorrichtung 4 in die Aussparung 24 die kontinuierliche Pressfläche wieder hergestellt wird.

Fig. 9 zeigt eine schematische Ansicht des unteren Teils 23 des Pressformwerkzeugs zusammen mit der unteren Haltevorrichtung 4 in geöffnetem Zustand.

Durch das Herausdrücken der Aufnahmeteile 20 durch die Betätigungsstangen 21 wird das Werkstück 2 durch die unteren Haltevorrichtungen 4 in Pfeilrichtung bewegt und von dem unteren Teil 23 der Pressform gelöst. Dadurch wird der Vorteil erreicht, dass das Prepreg-Werkstück 2 auf einfache Weise und ohne zu Verklemmen erneut aus der Pressform entnommen werden kann, beispielsweise durch das erfindungsgemäße Transportsystem. Insbesondere kann das Werkstück 2 sofort wieder von dem erfindungsgemäßen Transportsystem durch Aufsetzen der oberen Haltevorrichtungen 3 und Erzeugen einer Anziehungskraft aufgegriffen werden.

Alle geschilderten Einzelmerkmale können erfindungsgemäß in geeigneter und beliebiger Weise kombiniert oder ausgetauscht werden, um vorteilhafte Wirkungen der vorliegenden Erfindung zu erreichen.

## Patentansprüche

1. Transportvorrichtung (1) zum Transportieren eines nichtmagnetischen Werkstücks (2), mit:
- zumindest einer oberen Haltevorrichtung (3) zum Halten des Werkstückes (2) auf der einen Seite, und
- zumindest einer von der Transportvorrichtung (1) lösbaren, unteren Haltevorrichtung (4) zum Halten des Werkstücks (2) auf der gegenüberliegenden Seite,
wobei zwischen der oberen und der unteren Haltevorrichtung (3, 4) eine magnetische Anziehungskraft derart erzeugbar ist, dass das Werkstück (2) zwischen der oberen und der unteren Haltevorrichtung (3, 4) festgehalten wird.

2. Transportvorrichtung (1) nach Anspruch 1, wobei die untere Haltevorrichtung (4) ein permanentmagnetisches oder ferromagnetisches Material (12) zum Erzeugen der Anziehungskraft zu der oberen Haltevorrichtung (3) umfasst.

3. Transportvorrichtung (1) nach einem der vorangehenden Ansprüche, wobei die obere Haltevorrichtung (3) einen Elektromagneten (25) oder einen Dauermagneten zum Erzeugen der Anziehungskraft zu der unteren Haltevorrichtung (4) umfasst.

4. Transportvorrichtung (1) nach einem der vorangehenden Ansprüche, wobei die Transportvorrichtung (1) eine mechanische Vorrichtung zum Freigeben des Werkstücks aus den Haltevorrichtungen (3, 4) umfasst.

5. Transportvorrichtung (1) nach Anspruch 4, wobei die mechanische Vorrichtung zum Freigeben des Werkstücks (2) eine Pressplatte (9) zum Verändern des Abstandes zwischen dem Werkstück (2) und der oberen Haltevorrichtung (3) umfasst.

6. Transportvorrichtung (1) nach Anspruch 4, wobei die mechanische Vorrichtung zum Freigeben des Werkstücks ein Hilfshaltesystem (13, 14, 15) zum Ausüben einer entgegensetzt zur Anziehungskraft wirkenden Kraft auf die untere Haltevorrichtung (4) umfasst.

7. Transportvorrichtung (1) nach einem der vorangehenden Ansprüche, wobei die untere Haltevorrichtung (4) derart ausgestaltet ist, dass sich die Haltevorrichtung (4) in einer Aussparung (8, 19) zum Einsetzen der Haltevorrichtung (4) selbst justiert.

8. Transportvorrichtung (1) nach einem der vorangehenden Ansprüche, wobei die untere Haltevorrichtung (4) derart ausgestaltet ist, dass die Haltevorrichtung (4) in einer Aussparung (8, 19) zum Einsetzen der Haltevorrichtung (4) fixierbar ist.

9. Legeform (7) zum Auslegen eines Werkstückes (2), wobei die Legeform (7) eine derart ausgestaltete Aussparung (8) zum Einsetzen einer unteren Haltevorrichtung (4) aufweist, dass sich beim Einsetzen der unteren Haltevorrichtung (4) in die Aussparung (8) eine kontinuierliche Legefläche ergibt.

10. Hilfsablagevorrichtung (17, 18) zum Ablegen eines Werkstückes (2), wobei die Hilfsablagevorrichtung (17, 18) eine derart ausgestaltete Aufnahme (19) für eine untere Haltevorrichtung (4) umfasst, dass beim Ablegen des Werkstückes (2) in der Hilfsablagevorrichtung (17, 18) das Werkstück (2) durch die von der oberen Haltevorrichtung (3) gelöste, untere Haltevorrichtung (4) gehalten wird.

11. Pressformteil (23) zum Pressen eines Werkstücks (2), wobei das Pressformteil (23) eine derart gestaltete Aussparung (24) zum Einsetzen einer unteren Haltevorrichtung (4) aufweist, dass sich beim Einsetzen der unteren Haltevorrichtung (4) in die Aussparung (24) eine kontinuierliche Pressfläche ergibt und die untere Haltevorrichtung (4) in dem Pressformteil (23) derart verschiebbar ist, dass die untere Haltevorrichtung (4) zum Herauslösen des Werkstückes (2) aus dem Pressformteil (23) verwendet werden kann.

12. Verfahren zum Transportieren eines nichtmagnetischen Werkstücks (2) mit dem Schritt eines:
Festhaltens eines Werkstückes (2) zwischen einer oberen Haltevorrichtung (3) auf der einen Seite und einer von der Transportvorrichtung (1) lösbaren, unteren Haltevorrichtung (4) auf der gegenüberliegenden Seite mittels einer magnetischen Anziehungskraft zwischen der oberen und der unteren Haltevorrichtung (3, 4).
